# FASCICULE DE BREVET EUROPEEN

(11) **EP 2 203 343 B1**
(45) Date de publication et mention de la délivrance du brevet: **02.02.2011**
(21) Numéro de dépôt: 08842852.9
(22) Date de dépôt: 30.09.2008
(51) Int. Cl.: B62D 25/20

(54) **PLANCHER DE VEHICULE AUTOMOBILE COMPORTANT DES LONGERONS RENFORCES LOCALEMENT**
AUTOMOBILBODEN MIT LOKAL VERSTÄRKTEN SCHIENEN
AUTOMOBILE FLOOR INCLUDING LOCALLY REINFORCED RAILS

(30) Priorité: 26.10.2007 FR 0707542
(43) Date de publication de la demande: 07.07.2010
(73) Titulaire: Renault S.A.S., 92100 Boulogne-Billancourt (FR)
(72) Inventeur: HLUBINA, THIERRY, F-92370 Chaville (FR); DELORD, CHRISTIAN, F-93320 Pavillons Sous Bois (FR); VIVERO, FRANCOIS, F-78150 Le Chesnay (FR)
(86) Numéro de dépôt international: PCT/FR2008/051762
(87) Numéro de publication internationale: WO 2009/053569

(56) Documents cités:
- EP-A- 0 421 277
- EP-A- 0 693 414
- US-A- 2 710 222
- US-A- 5 713 625
- US-A- 5 882 065

## Description

L'invention concerne un plancher de véhicule automobile comportant deux longerons disposés symétriquement par rapport à l'axe longitudinal du véhicule.

Dans les réalisations connues, (voir EP 421 277 A) chaque longeron est constitué par deux tôles de section en U superposées de façon à former un corps creux, l'une des tôles de section en U s'étendant sous le plancher et l'autre tôle s'étendant au-dessus du plancher et les extrémités des ailes latérales de chacune des tôles de section en U étant soudées à la tôle du plancher, chaque longeron comportant une zone coudée.

Cette zone coudée est généralement située à l'avant du longeron, dans la zone de raccordement incurvée vers le haut entre le plancher et le tablier du véhicule.

Cette zone subit de fortes contraintes notamment lors d'un choc frontal du véhicule.

Pour permettre aux longerons de résister à ces contraintes, une solution connue est d'utiliser pour les deux tôles de section en U, une épaisseur de tôle relativement importante.

Cette solution présente cependant l'inconvénient d'augmenter la masse et le coût des longerons et donc du véhicule.

Le but de la présente invention est de remédier aux inconvénients des solutions ci-dessus.

Ce but est atteint selon l'invention, par un plancher de véhicule automobile comportant deux longerons disposés symétriquement par rapport à l'axe longitudinal du véhicule, chaque longeron étant constitué par deux tôles de section en U superposées de façon à former un corps creux, l'une des tôles de section en U s'étendant sous le plancher et l'autre tôle s'étendant au-dessus du plancher et les extrémités des ailes latérales de chacune des tôles de section en U étant soudées à la tôle du plancher, chaque longeron comportant une zone coudée, **caractérisé en ce que** la base supérieure de la section en U de la tôle qui s'étend au-dessus du plancher, présente dans la zone coudée et uniquement dans cette zone au moins une nervure de renfort.

La nervure de renfort est par exemple réalisée par pliage de la tôle.

Ainsi, la nervure s'étend uniquement dans la zone coudée qui est la plus sollicitée par les contraintes.

Cette disposition permet à la fois de diminuer l'épaisseur de la tôle du longeron et la masse étant donné que la surface développée de la tôle n'est augmentée que dans une portion réduite de la longueur du longeron.

De préférence, la base de la tôle de section en U supérieure du longeron présente dans ladite zone coudée deux nervures longitudinales.

Dans un mode de réalisation, les deux nervures sont situées respectivement sur les deux bords de ladite base.

Dans un mode de réalisation préféré, ladite zone coudée est située à l'avant du longeron dans la zone de raccordement incurvée vers le haut entre le plancher et le tablier du véhicule.

Ainsi, les nervures renforcent efficacement la zone la plus sollicitée du longeron en cas de choc frontal du véhicule.

Dans un mode de réalisation, la hauteur de la section en U de la tôle, dont la base supérieure présente la ou lesdites nervures diminue progressivement de l'arrière vers l'avant de ladite zone coudée.

Selon une autre particularité avantageuse de l'invention, la hauteur et la largeur de la ou les nervures sont comprises entre 10% et 30% de la hauteur maximale de la section en U de ladite tôle.

Selon une autre particularité, les ailes de chacune des tôles de section en U sont bordées latéralement par un rebord horizontal qui est soudé au plancher.

D'autres particularités et avantages apparaîtront encore tout au long de la description ci-après.

L'invention est maintenant décrite en référence aux dessins annexés, non limitatifs, dans lesquels :
- la figure 1 est une vue partielle d'un plancher de véhicule selon l'invention, comportant un longeron dont la tôle est renforcée par des nervures pratiquées dans une zone coudée du longeron,
- la figure 2 est une vue en coupe transversale suivant le plan II-II du longeron représenté sur la figure 1.

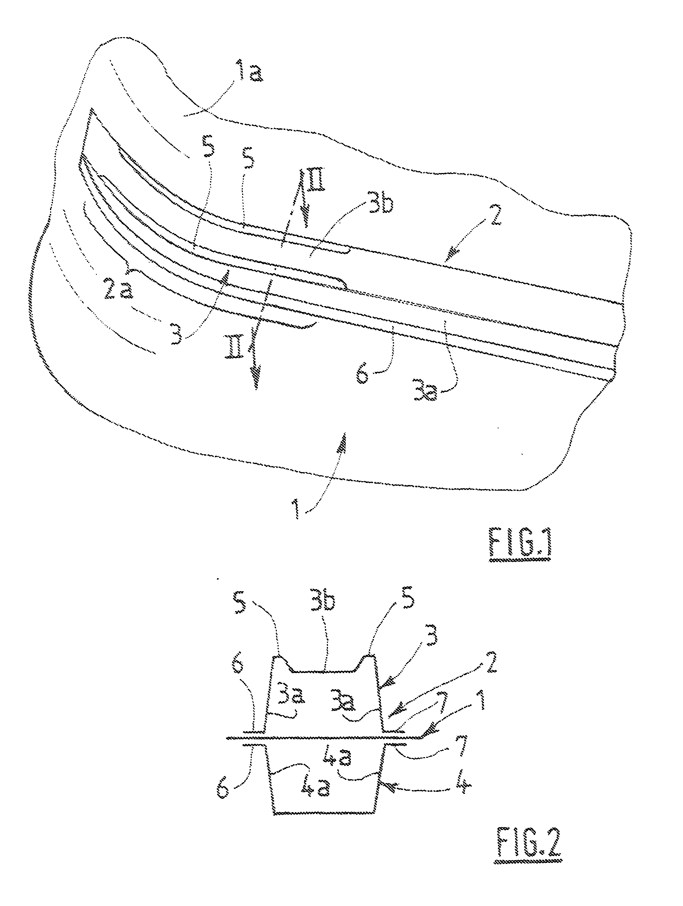

Le plancher 1 de véhicule automobile, représenté partiellement sur la figure 1 comporte deux longerons 2, dont un seul est visible sur la figure 1, disposés symétriquement par rapport à l'axe longitudinal du véhicule.

Chaque longeron 2 est constitué (voir figure 2) par deux tôle 3, 4 de section en U superposées de façon à former un corps creux, l'une 4 des tôles de section en U s'étendant sous le plancher 1 et l'autre tôle 3 s'étendant au-dessus du plancher 1. La concavité de chaque longeron est ainsi dirigée vers le plancher 1, les deux longerons étant situés en regard l'un de l'autre de part et d'autre du plancher.

Les extrémités des ailes latérales 3a, 4a de chacune des tôles 3, 4 de section en U sont soudées à la tôle du plancher 1.

Le longeron 2 représenté sur la figure 1 comporte une zone coudée 2a.

Conformément à l'invention, la base supérieure 3b de la section en U de la tôle 3 qui s'étend au-dessus du plancher 1, présente dans la zone coudée 2a et uniquement dans cette zone, au moins une nervure 5 de renfort réalisée par pliage de la tôle 3.

Dans l'exemple représenté sur les figues 1 et 2, la base 3b de la tôle 3 présente deux nervures longitudinales 5, parallèles l'une par rapport à l'autre, les deux nervures 5 étant situées respectivement sur les deux bords opposés de la base 3b. Ces nervures font saillie de la base 3b de la tôle 3 dans une direction opposée au plancher.

On voit sur la figure 1 que la zone coudée 2a est située à l'avant du longeron 2 dans la zone de raccordement la incurvée vers le haut entre le plancher 1 et le tablier (non représenté) du véhicule.

La figure 1 montre d'autre part que la hauteur de la section en U de la tôle 3 dont la base supérieure 3b présente les nervures 5 diminue progressivement de l'arrière vers l'avant de la zone coudée 2a, de sorte que l'avant de la base 3b rejoint la surface du plancher 1.

A titre d'exemple, la hauteur et la largeur des nervures 5 peuvent être comprises entre 10% et 30% de la hauteur maximale de la section en U de la tôle 3, c'est-à-dire à l'arrière de la zone coudée 2a.

La figure 2 montre par ailleurs que les ailes 3a, 4a de chacune des tôles 3, 4 de section en U sont bordées latéralement par un rebord horizontal 6, 7 qui est soudé au plancher 1.

En limitant la présence des nervures 5 dans la zone coudée 2a l'invention permet de diminuer l'épaisseur de la tôle 3 du longeron 2 d'environ 10%, ce qui permet d'obtenir une réduction de masse d'environ 8%, tout en garantissant une résistance suffisant du longeron en cas de choc frontal.

Bien entendu, l'invention s'applique en général aux longerons en tôle d'acier, mais pourrait également s'appliquer aux longerons en tôle d'aluminium.

## Revendications

1. Plancher de véhicule automobile comportant deux longerons (2) disposés symétriquement par rapport à l'axe longitudinal du véhicule, chaque longeron (2) étant constitué par deux tôles (3, 4) de section en U superposées de façon à former un corps creux, l'une (4) des tôles de section en U s'étendant sous le plancher (1) et l'autre tôle (3) s'étendant au-dessus du plancher (1) et les extrémités des ailes latérales de chacune des tôles (3, 4) de section en U étant soudées à la tôle du plancher (1), chaque longeron (2) comportant une zone coudée (2a), **caractérisé en ce que** la base supérieure (3b) de la section en U de la tôle (3) qui s'étend au-dessus du plancher (1), présente dans la zone coudée (2a) et uniquement dans cette zone (2a) au moins une nervure (5) de renfort.

2. Plancher selon la revendication 1, **caractérisé en ce que** ladite base (3b) présente deux nervures longitudinales (5).

3. Plancher selon la revendication 2, **caractérisé en ce que** les deux nervures (5) sont situées respectivement sur les deux bords de ladite base (3b).

4. Plancher selon l'une des revendications 1 à 3, **caractérisé en ce que** ladite zone coudée (2a) est située à l'avant du longeron (2) dans la zone de raccordement (1a) incurvée vers le haut entre le plancher (1) et le tablier du véhicule.

5. Plancher selon l'une des revendications 1 à 4, **caractérisé en ce que** la hauteur de la section en U de la tôle (3), dont la base supérieure (3b) présente la ou lesdites nervures (5) diminue progressivement de l'arrière vers l'avant de ladite zone coudée (2a).

6. Plancher selon l'une des revendications 1 à 5, **caractérisé en ce que** la hauteur et la largeur de la ou les nervures (5) sont comprises entre 10% et 30% de la hauteur maximale de la section en U de ladite tôle (3a).

7. Plancher selon l'une des revendications 1 à 6, **caractérisé en ce que** les ailes (3a, 4a) de chacune des tôles (3, 4) de section en U sont bordées latéralement par un rebord horizontal (6) qui est soudé au plancher (1).

## Claims

1. Motor vehicle floor comprising two rails (2) arranged symmetrically with respect to the longitudinal axis of the vehicle, each rail (2) consisting of two U-section plates (3, 4) superposed to form a hollow body, one (4) of the U-section plates being beneath the floor (1) and the other plate (3) being above the floor (1) and the edges of the lateral flanges of each of the U-section plates (3, 4) being welded to the plate of the floor (1), each rail (2) comprising a bent region (2a), **characterized in that** the upper base (3b) of the U-section of the plate (3) above the floor (1) has, in the bent region (2a) and only in this region (2a), at least one reinforcing rib (5).

2. Floor according to Claim 1, **characterized in that** said base (3b) has two longitudinal ribs (5).

3. Floor according to Claim 2, **characterized in that** the two ribs (5) are situated one on each of the two edges of said base (3b).

4. Floor according to one of Claims 1-3, **characterized in that** said bent region (2a) is situated at the front of the rail (2) in the upwardly curved intermediate region (1a) between the floor (1) and the bulkhead of the vehicle.

5. Floor according to one of Claims 1-4, **characterized in that** the height of the U-section of the plate (3), whose upper base (3b) comprises said rib or ribs (5), decreases progressively from the rear to the front of said bent region (2a).

6. Floor according to one of Claims 1-5, **characterized in that** the height and width of the rib or ribs (5) are between 10% and 30% of the maximum height of the U-section of said plate (3a).

7. Floor according to one of Claims 1-6, **characterized in that** the flanges (3a, 4a) of each of the U-section plates (3, 4) are bordered laterally by a horizontal lip (6) which is welded to the floor (1).

## Patentansprüche

1. Kraftfahrzeugboden mit zwei Längsträgern (2), die symmetrisch bezüglich der Längsachse des Fahrzeugs angeordnet sind, wobei jeder Längsträger (2) aus zwei Blechen (3, 4) mit U-förmigem Querschnitt besteht, die so übereinander angeordnet sind, dass sie einen Hohlkörper bilden, wobei sich eines (4) der Bleche mit U-förmigem Querschnitt unter dem Boden (1) erstreckt und sich das andere Blech (3) über dem Boden (1) erstreckt und die Enden der Seitenschenkel jedes der Bleche (3, 4) mit U-förmigem Querschnitt mit dem Blech des Bodens (1) verschweißt sind, wobei jeder Längsträger (2) einen gebogenen Bereich (2a) aufweist, **dadurch gekennzeichnet, dass** die obere Basis (3b) des U-förmigen Querschnitts des Blechs (3), die sich über dem Boden (1) erstreckt, in dem gebogenen Bereich (2a) und einzig in diesem Bereich (2a) mindestens eine Verstärkungsrippe (5) aufweist.

2. Boden nach Anspruch 1, **dadurch gekennzeichnet, dass** die Basis (3b) zwei Längsrippen (5) aufweist.

3. Boden nach Anspruch 2, **dadurch gekennzeichnet, dass** die beiden Rippen (5) jeweils an den beiden Rändern der Basis (3b) positioniert sind.

4. Boden nach einem der Ansprüche 1 bis 3, **dadurch gekennzeichnet, dass** sich der gebogene Bereich (2a) vor dem Längsträger (2) in dem nach oben gekrümmten Verbindungsbereich (1a) zwischen dem Boden (1) und der Stirnwand des Fahrzeugs befindet.

5. Boden nach einem der Ansprüche 1 bis 4, **dadurch gekennzeichnet, dass** die Höhe des U-förmigen Querschnitts des Blechs (3), dessen obere Basis (3b) die Rippe oder die Rippen (5) aufweist, nach hinten hin zum vorderen Teil des gebogenen Bereichs (2a) allmählich abnimmt.

6. Boden nach einem der Ansprüche 1 bis 5, **dadurch gekennzeichnet, dass** die Höhe oder die Breite der Rippe oder der Rippen (5) zwischen 10% und 30% der maximalen Höhe des U-förmigen Querschnitts des Blechs (3a) liegt.

7. Boden nach einem der Ansprüche 1 bis 6, **dadurch gekennzeichnet, dass** die Schenkel (3a, 4a) jedes Blechs (3, 4) mit U-förmigem Querschnitt seitlich durch eine horizontale Anschlusskante (6) begrenzt werden, die mit dem Boden (1) verschweißt ist.
